# EUROPEAN PATENT APPLICATION

(11) **EP 4 625 295 A1**
(43) Date of publication of application: **01.10.2025**
(21) Application number: 23910381.5
(22) Date of filing: 22.12.2023
(51) Int. Cl.: G06Q 30/018, G06F 18/21, G06F 18/214, G06N 3/04, G06N 3/045, G06N 3/08, G06N 3/0985

(54) **METHOD FOR GENERATING BILL-OF-MATERIAL FILE, AND RELATED DEVICE**

(30) Priority: 31.12.2022 CN 202211737215
(71) Applicant: Huawei Technologies Co., Ltd., Shenzhen, Guangdong 518129 (CN)
(72) Inventor: YAN, Minrui, Shenzhen, Guangdong 518129 (CN); TANG, Wen, Shenzhen, Guangdong 518129 (CN); QIN, Yukun, Shenzhen, Guangdong 518129 (CN); ZHAO, Zijun, Shenzhen, Guangdong 518129 (CN); ZHANG, Yu, Shenzhen, Guangdong 518129 (CN); ZHANG, Rui, Shenzhen, Guangdong 518129 (CN)
(74) Representative: Huawei European IPR
(86) International application number: PCT/CN2023/140908
(87) International publication number: WO 2024/140455

(57) **Abstract**

Embodiments of this application disclose a method for generating a bill of materials file and a related device. The method includes: A generation device obtains target information, where the target information includes training dependency information, model composition information, and model metadata, the training dependency information is information about a training resource for training an AI model, the model composition information is information about an intermediate model in a process of training the AI model, and the model metadata is attribute information of the AI model. The generation device generates a bill of materials file of the AI model, where the bill of materials file includes the target information.

## Description

### TECHNICAL FIELD

Embodiments of this application relate to the field of artificial intelligence, and in particular, to a method for generating a bill of materials file and a related device.

### BACKGROUND

Next-generation artificial intelligence based on a deep neural network is a combination of data, algorithms, and computing power. A large amount of data needs to be aggregated to obtain an AI model through training. In a process of forming the AI model, related datasets, pre-trained models, training parameter settings, training algorithms, and the like involve different obtaining manners and intellectual property issues, and security cannot be ensured. In addition, multi-party cooperation is involved in a process from training to deployment and running of the AI model, and the AI model may deviate from an expectation due to a manual operation, affecting service running. In conclusion, the AI model has requirements on transparent auditing, risk management, and consistency verification during training, testing, deployment, and running.

Conventional application software can meet supply chain management and risk management requirements based on a software bill of materials (software bill of materials, SBOM), but the AI model is quite different from the application software. Therefore, directly reusing the SBOM cannot meet the foregoing requirements.

### SUMMARY

Embodiments of this application provide a method for generating a bill of materials file and a related device, to support requirements of an AI model on transparent auditing, risk management, and consistency verification during training, testing, deployment, and running.

A first aspect of this application provides a method for generating a bill of materials file.

A generation device obtains target information, where the target information includes training dependency information, model composition information, and model metadata, the training dependency information is information about a training resource for training an AI model, the model composition information is information about an intermediate model in a process of training the AI model, and the model metadata is attribute information of the AI model. The generation device generates a bill of materials file of the AI model, where the bill of materials file includes the target information.

In this application, because the model metadata indicates the attribute information of the AI model, the AI model-based bill of materials file can implement consistency verification on the AI model during training, testing, deployment, and running, to avoid AI model replacement. Because the training dependency information indicates the information about the training resource for training the AI model, and the model composition information indicates the information about the intermediate model in the process of training the AI model, the AI model-based bill of materials file can also implement transparent auditing and risk management on the AI model.

In a possible implementation, the training dependency information includes information about a dataset for training the AI model.

In this application, the training dependency information includes the information about the dataset. Therefore, when a problem occurs in the AI model during actual application, if it is determined that the problem is caused by the dataset, tracing may be performed based on the training dependency information, to control a risk impact range.

In a possible implementation, the training dependency information further includes information about a pre-trained model for training the AI model, and/or information about an initialization parameter for training the AI model, and/or information about a training script for training the AI model.

In this application, the training dependency information further includes the information about the pre-trained model, and/or the information about the initialization parameter, and/or the information about the training script. Therefore, when a problem occurs in the AI model during actual application, if it is determined that the problem is caused by the pre-trained model, the initialization parameter, or the training script, tracing may be performed based on the training dependency information, to control a risk impact range.

In a possible implementation, the information about the dataset includes one or more of identification information of the dataset, an obtaining manner of the dataset, a type of the dataset, usage of the dataset, license information of the dataset, a size of the dataset, a storage format of the dataset, a storage location of the dataset, information about a data subset of the dataset, information about a creator of the dataset, and an authentication code of the dataset; the information about the pre-trained model includes one or more of identification information of the pre-trained model, license information of the pre-trained model, information about a creator of the pre-trained model, and an authentication code of the pre-trained model; the information about the initialization parameter includes one or more of identification information of the initialization parameter, a size of the initialization parameter, generation time of the initialization parameter, a storage link of the initialization parameter, and an authentication code of the initialization parameter; and the information about the training script includes one or more of identification information of the training script, a file type of the training script, a size of the training script, a storage path of the training script, information about a creator of the training script, and an authentication code of the training script.

In this application, specific data included in the training dependency information is limited, and feasibility of supporting the transparent auditing and the risk management on the AI model by using the training dependency information is improved.

In a possible implementation, the information about the data subset includes one or more of a name of the data subset, a type of the data subset, a quantity of samples of the data subset, a storage location of the data subset, and information about a tag of the data subset.

In a possible implementation, the model composition information includes one or more of identification information of the intermediate model, a file type of the intermediate model, a size of the intermediate model, creation time of the intermediate model, a storage path of the intermediate model, an authentication code of the intermediate model, performance information of the intermediate model, and an authentication code of the performance information of the intermediate model.

In this application, specific data included in the model composition information is limited, and feasibility of supporting the transparent auditing and the risk management on the AI model by using the model composition information is improved.

In a possible implementation, the model metadata includes one or more of identification information of the AI model, version information of the AI model, description information of the AI model, a storage link of the bill of materials file of the AI model, license information of the AI model, information about a creator of the AI model, computing platform information of the AI model, and an authentication code of the AI model.

In this application, specific data included in the model metadata is limited, and feasibility of supporting the consistency verification on the AI model during training, testing, deployment, and running by using the model metadata is improved.

In a possible implementation, the target information further includes training process information, and the training process information is information about a processing step in the process of training the AI model.

In this application, because the training process information indicates the information about the processing step in the training process of the AI model, the bill of materials file of the AI model can further support the transparent auditing and the risk management on the AI model.

In a possible implementation, the training process information includes one or more of identification information of the processing step, a type of the processing step, a timestamp of the processing step, a parameter of the processing step, and the authentication code of the performance information of the intermediate model obtained after the processing step.

In this application, specific data included in the training process information is limited, and feasibility of supporting the transparent auditing and the risk management on the AI model by using the training process information is improved.

In a possible implementation, the target information further includes training environment information, and the training environment information is information about software and hardware for training the AI model.

In this application, because the training environment information indicates the information about the software and the hardware for training the AI model, the bill of materials file of the AI model can further support the transparent auditing and the risk management on the AI model.

In a possible implementation, the training environment information includes one or more of identification information of the software, version information of the software, a type of the software, usage of the software, and license information of the software, and one or more of identification information of the hardware, a model of the hardware, and a type of the hardware.

In this application, specific data included in the training environment information is limited, and feasibility of supporting the transparent auditing and the risk management on the AI model by using the training environment information is improved.

A second aspect of this application provides a generation device,
including an obtaining unit, configured to obtain target information, where the target information includes training dependency information, model composition information, and model metadata, the training dependency information is information about a training resource for training an AI model, the model composition information is information about an intermediate model in a process of training the AI model, and the model metadata is attribute information of the AI model; and a processing unit, configured to generate a bill of materials file of the AI model, where the bill of materials file includes the target information.

In a possible implementation, the training dependency information includes information about a dataset for training the AI model.

In a possible implementation, the training dependency information further includes information about a pre-trained model for training the AI model, and/or information about an initialization parameter for training the AI model, and/or information about a training script for training the AI model.

In a possible implementation, the information about the dataset includes one or more of identification information of the dataset, an obtaining manner of the dataset, a type of the dataset, usage of the dataset, license information of the dataset, a size of the dataset, a storage format of the dataset, a storage location of the dataset, information about a data subset of the dataset, information about a creator of the dataset, and an authentication code of the dataset; the information about the pre-trained model includes one or more of identification information of the pre-trained model, license information of the pre-trained model, information about a creator of the pre-trained model, and an authentication code of the pre-trained model; the information about the initialization parameter includes one or more of identification information of the initialization parameter, a size of the initialization parameter, generation time of the initialization parameter, a storage link of the initialization parameter, and an authentication code of the initialization parameter; and the information about the training script includes one or more of identification information of the training script, a file type of the training script, a size of the training script, a storage path of the training script, information about a creator of the training script, and an authentication code of the training script.

In a possible implementation, the information about the data subset includes one or more of a name of the data subset, a type of the data subset, a quantity of samples of the data subset, a storage location of the data subset, and information about a tag of the data subset.

In a possible implementation, the model composition information includes one or more of identification information of the intermediate model, a file type of the intermediate model, a size of the intermediate model, creation time of the intermediate model, a storage path of the intermediate model, an authentication code of the intermediate model, performance information of the intermediate model, and an authentication code of the performance information of the intermediate model.

In a possible implementation, the model metadata includes one or more of identification information of the AI model, version information of the AI model, description information of the AI model, a storage link of the bill of materials file of the AI model, license information of the AI model, information about a creator of the AI model, computing platform information of the AI model, and an authentication code of the AI model.

In a possible implementation, the target information further includes training process information, and the training process information is information about a processing step in the process of training the AI model.

In a possible implementation, the training process information includes one or more of identification information of the processing step, a type of the processing step, a timestamp of the processing step, a parameter of the processing step, and the authentication code of the performance information of the intermediate model obtained after the processing step.

In a possible implementation, the target information further includes training environment information, and the training environment information is information about software and hardware for training the AI model.

In a possible implementation, the training environment information includes one or more of identification information of the software, version information of the software, a type of the software, usage of the software, and license information of the software, and one or more of identification information of the hardware, a model of the hardware, and a type of the hardware.

A third aspect of this application provides a generation device,
including a memory, a transceiver, and a processor, where the memory is configured to store a program. The processor is configured to execute the program in the memory, and the processor is configured to enable the generation device to perform the method in the first aspect according to instructions in code of the program.

A fourth aspect of this application provides a computer-readable storage medium, storing computer instructions or a program. When the computer instructions or the program is executed, a computer is enabled to perform the method in the first aspect.

A fifth aspect of this application provides a computer program product, including computer instructions or a program. When the computer instructions or the program is executed, a computer is enabled to perform the method in the first aspect.

### BRIEF DESCRIPTION OF DRAWINGS

FIG. 1 is a diagram of a system architecture to which a method for generating a bill of materials file is applied according to this application;
FIG. 2 is a schematic flowchart of a method for generating a bill of materials file according to this application;
FIG. 3a is a diagram of a method for generating a bill of materials file according to this application;
FIG. 3b is another diagram of a method for generating a bill of materials file according to this application;
FIG. 4 is a diagram of an application scenario of a method for generating a bill of materials file according to this application;
FIG. 5 is a diagram of a structure of a generation device according to this application; and
FIG. 6 is a diagram of another structure of a generation device according to this application.

### DESCRIPTION OF EMBODIMENTS

The following describes embodiments of this application with reference to accompanying drawings. It is clear that the described embodiments are merely some rather than all of embodiments of this application. A person of ordinary skill in the art may know that with development of technologies and emergence of new scenarios, technical solutions provided in embodiments of this application are also applicable to similar technical problems.

In the specification, claims, and accompanying drawings of this application, the terms "first", "second", and the like are intended to distinguish between similar objects but do not necessarily indicate a specific order or sequence. It should be understood that the data termed in such a way are interchangeable in proper circumstances so that embodiments described herein can be implemented in other orders than the order illustrated or described herein. In addition, the terms "include", "have", and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

To facilitate understanding of this application, the following first describes concepts in this application.

An AI model is used to describe an algorithm structure file in a machine learning and inference process, and usually includes information such as an operator, a connection relationship, and a weight. Machine learning executes, by inputting data requested for inference, a complex computing process described by using a model, to finally obtain a computing result and implement an inference function.

A pre-trained model (Pre-trained Model) is a model that has been trained by using a dataset, but performance and the like of the pre-trained model has not reached a level of direct use.

Model fine-tuning (Model Fine-tuning) is used to perform fine tuning (Fine Tune) based on a given pre-trained model, to convert the pre-trained model into a mature model that can be directly used for a service application. In comparison with training from the beginning, the model fine-tuning saves a large amount of computing resources and computing time, improves computing efficiency, and even improves accuracy.

Machine learning (Machine Learning) is an important branch of the field of artificial intelligence, and studies how a computer simulates or implements human learning behaviors, to obtain new knowledge or skill and reorganize an existing knowledge structure, so that performance of the computer is continuously improved. Deep learning is an important study direction in the machine learning. The AI model is one of the most important and valuable assets in the machine learning.

A bill of materials (Bill of Materials) is also referred to as a product structure, and is a list of all materials needed to construct, manufacture, or repair a product or a service. The bill of materials includes a broad list of raw materials, sub-assembly bodies, intermediate assembly bodies, components, and parts related to creating a product or a service; and a quantity of each part, costs of each part, and descriptions of how to assemble each part.

A process of forming the AI model relates to one or more datasets, pre-trained models, training parameter settings, training algorithms, and the like. The depended dataset, pre-trained model, and training algorithm may be private, open-source, or purchased, and relate to different intellectual property issues, and whether the dataset, the pre-trained model, and the training algorithm may have a hidden malicious sample, backdoor, and vulnerability may directly affect security of the AI model. In addition, a process from training to deployment and running of the AI model relates to cooperation of a plurality of relevant participants, such as a data provider, a data processor, a pre-trained model creator, a computing platform provider, and an AI application development and running party, and a plurality of teams in an AI model training party, such as development, testing, and application teams; and an AI model training process relates to a plurality of rounds of iteration optimization, and many AI model versions are generated. In this case, there is a high probability that service running is affected because a mis-operation of a participant or a malicious sample like a maliciously injected backdoor causes an AI model that is finally deployed and used to deviate from an expectation.

In addition, the industry also has strong related requirements on transparent auditability, traceability, and consistency verification of the AI model. For example, in phases of algorithm designing, implementation, application, and the like, it is required that transparency, explainability, understandability, reliability, and controllability be improved, and resilience, adaptability, and an anti-interference capability of an artificial intelligence system be enhanced, to gradually achieve verifiability, auditability, supervisability, traceability, predictability, and reliability. Alternatively, training data is required to have a complete signature or verification code, record configuration information of deployed software and hardware environments, manage the AI model, provide a traceable function for the AI model, manage a version of the AI model, and be traceable for the version of the AI model. In an actual process of training to deployment and using of the AI model, cooperation of a plurality of development teams, such as a dataset constructing team, a model training team, a model testing team, and a model deployment and using team is related; and a final AI model may alternatively be deployed in an edge environment, which poses a high risk, and interaction between the final AI model and an administrator is weak. In this case, there is a risk like that an unexpected version of the AI model is deployed due to a manual mis-operation or because the AI model is tampered with or replaced during training, testing, or deployment and using of the AI model. Therefore, there is a strong requirement on consistency tracing of the AI model. In addition, the cooperation of the plurality of teams is related in the process of forming the AI model. A case, for example, that internal malicious personnel insert a malicious sample into a dataset may fail to be detected in a timely manner, and the dataset including the malicious sample may be reused in training processes of a plurality of AI models. If that an AI model has a problem is found in a subsequent process of using the AI model, the dataset that causes the problem needs to be traceable, and AI models that are further affected by the dataset need to be determined and updated in a timely manner, to minimize impact on a service. In addition, there are many international laws and regulations and standards that raise similar requirements. For example, the EU AI regulation Article 12 requires to ensure that an artificial intelligence system is traceable throughout a lifecycle of running of the artificial intelligence system, usage of the artificial intelligence system meets an expectation, and running of a high-risk artificial intelligence system is monitored. The European High-level Expert Group on Artificial Intelligence also requires that traceability of elements, related to the AI system, including data, a system, and a business model be ensured. ETSI SAI GR 010 Traceability of AI Models requires that traceability of the AI model include traceability of data, traceability of a processing pipeline, traceability of a model output, traceability of model metadata, and traceability of lifecycle management.

In conclusion, the AI model has requirements on transparent auditing, risk management, and consistency verification during training, testing, deployment, and running. Conventional application software can meet supply chain management and risk management requirements based on a SBOM. Many standard organizations have defined SBOM composition specifications. For example, Linux Foundation has formulated an SPDX specification to create a data exchange format, to collect and share, in a common format, information about a related software package and related content, so that time is saved and data accuracy is improved. In this way, companies and organizations can share software package metadata that can be read by humans and processed by machines, to facilitate software supply chain management. SPDX includes the following information:

SPDX document creation information, where the SPDX document creation information is metadata for associating an analysis result with a specific version and license of an SPDX file, and provides information about a creation mode, time, and a creator of the SPDX file;
package information, where the package information is common attribute information related to an entire software package;
file information, where the file information is information related to a file that may be included in the software package;
code segment information, where the code segment information is partial information about a specific file;
other license information, where the other license information is related license information that is not in an SPDX license list and that is captured;
a relationship between SPDX elements, where the relationship between SPDX elements is information about how a document, a package, and a file are associated; and
a note, where the note is information about when and by whom the SPDX file is reviewed.

However, the AI model is quite different from the application software. Therefore, directly reusing the SBOM cannot meet the foregoing requirements.

This application provides a method for generating a bill of materials file and a related device, to support requirements of an AI model on transparent auditing, risk management, and consistency verification during training, testing, deployment, and running.

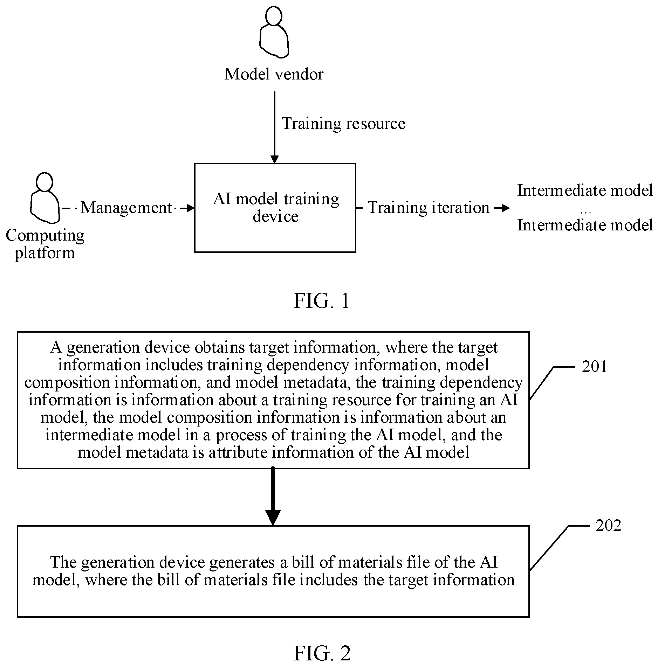

This application may be applied to the scenario shown in FIG. 1. Generation of the AI model mainly depends on a model vendor and a computing platform. The computing platform is responsible for providing and managing an AI model training device. A basic software stack for AI training or AI inference, including an AI processor acceleration library, a training framework, an AI application enabling development kit, and the like, is installed on the AI model training device. The model vendor uploads, to the AI model training device, a training resource needed for training the AI model, for example, an initialization parameter, a training script, a dataset, a neural network structure, a pre-trained model, and a hyperparameter, to perform model training iteration, so that a needed AI model is finally obtained through iteration of one or more intermediate models.

A generation device in this application is the AI model training device. Refer to FIG. 2. The following describes a procedure of a method for generating a bill of materials file according to this application.

201: The generation device obtains target information, where the target information includes training dependency information, model composition information, and model metadata, the training dependency information is information about a training resource for training an AI model, the model composition information is information about an intermediate model in a process of training the AI model, and the model metadata is attribute information of the AI model.

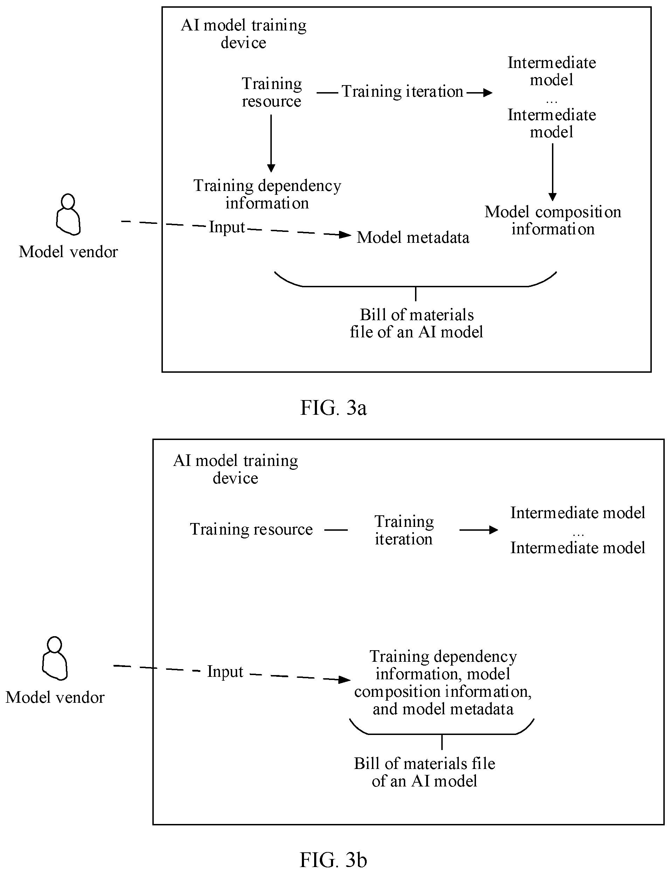

Before training starts, a model vendor uploads, to the AI model training device, the training resource for training the AI model. Refer to FIG. 3a. The AI model training device autonomously extracts the training dependency information based on the training resource. The training dependency information is the information about the training resource. For example, the training dependency information includes information about a dataset for training the AI model. Optionally, the training dependency information may further include information about a pre-trained model, and/or information about an initialization parameter, and/or information about a training script for training the AI model.

For example, the information about the dataset includes one or more of identification information of the dataset, an obtaining manner of the dataset, a type of the dataset, usage of the dataset, license information of the dataset, a size of the dataset, a storage format of the dataset, a storage location of the dataset, information about a data subset of the dataset, information about a creator of the dataset, and an authentication code of the dataset. The identification information of the dataset includes, for example, an identifier ID of the dataset and a name of the dataset. The obtaining manner of the dataset is, for example, imagenet or COCO. The type of the dataset is, for example, an image, a video, a voice, or a text. The usage of the dataset is, for example, to classify images or to perform target detection. The information about the creator of the dataset includes, for example, creation time of the dataset and public key information of the creator. The authentication code of the dataset may be, for example, a hash code corresponding to the dataset, or may be a signature obtained through encrypting the hash code by using a private key.

The information about the data subset includes, for example, one or more of a name of the data subset, a type of the data subset, a quantity of samples of the data subset, a storage location of the data subset, and information about a tag of the data subset. The type of the data subset includes, for example, a data subset for training, verification, or testing. The information about the tag includes, for example, one or more of a file format of the tag and a storage location of the tag. The file format of the tag may be of a plurality of types such as .json and .xml. For example, a tag in a data subset used for image classification usually uses a .json file format.

The information about the pre-trained model includes one or more of identification information of the pre-trained model, license information of the pre-trained model, information about a creator of the pre-trained model, and an authentication code of the pre-trained model. The information about the creator of the pre-trained model includes, for example, creation time of the pre-trained model and public key information of the creator. The information about the initialization parameter includes one or more of identification information of the initialization parameter, a size of the initialization parameter, generation time of the initialization parameter, a storage link of the initialization parameter, and an authentication code of the initialization parameter. The information about the training script includes one or more of identification information of the training script, a file type of the training script, a size of the training script, a storage path of the training script, information about a creator of the training script, and an authentication code of the training script.

Optionally, the AI model training device further autonomously extracts training environment information. The training environment information is information about software and hardware for training the AI model. For example, the training environment information includes one or more of identification information of the software, version information of the software, a type of the software, usage of the software, and license information of the software, and one or more of identification information of the hardware, a model of the hardware, and a type of the hardware.

In a training iteration process, the AI model training device further autonomously extracts the model composition information. The model composition information is information about one or more intermediate models in the process of training the AI model. For example, the model composition information includes one or more of identification information of the intermediate model, a file type of the intermediate model, a size of the intermediate model, creation time of the intermediate model, a storage path of the intermediate model, an authentication code of the intermediate model, performance information of the intermediate model, and an authentication code of the performance information of the intermediate model. The performance information may be a performance record file provided by using a mainstream training framework. For example, a Tensorflow training framework has a built-in debugging tool Tensorboard developed by using a visual tool for AI model internal parameter tracing and visualization. TensorBoard can store performance data of training of the AI model. A file format of the performance data is a tfevents file. A PyTorch framework also supports TensorBoard since 1.2.0. TensorBoard can be used to monitor changes of various indicators of the AI model, such as dynamic changes of acc and loss, visualize a structure of the AI model, visualize word embedding space, analyze model performance, and analyze fairness of the dataset. The file type of the intermediate model varies according to types of model files exported from different training frameworks. For example, a model file exported from the TensorFlow framework includes a model parameter .data file, a model network structure .meta file, and mapping information .index file. The .index file stores a correspondence between data in the .data file and a diagram of a structure in the .meta file. In the pytorch framework, a most common model file name extension for storing a model is .pt or .pth.

In addition, for the training dependency information, the training environment information, and the model composition information, the AI model training device obtains an authentication code corresponding to the training dependency information, an authentication code corresponding to the training environment information, and an authentication code corresponding to the model composition information. The authentication code may be a hash code, or may be a signature obtained by encrypting the hash code by using a private key of a computing platform. For example, the AI model training device obtains a hash code corresponding to the training dependency information, or further encrypts the hash code by using the private key of the computing platform, to obtain a signature.

The model vendor may view, through an interface provided by the AI model training device, the training dependency information, the training environment information, the model composition information, and the authentication code corresponding to each piece of the foregoing information, and further inputs the model metadata to the AI model training device through the interface. The model metadata is the attribute information of the AI model. For example, the model metadata includes one or more of identification information of the AI model, version information of the AI model, description information of the AI model, a storage link of a bill of materials file, license information of the AI model, information about a creator of the AI model, information about a computing platform for training the AI model, and an authentication code of the AI model. The information about the computing platform for training the AI model includes public key information of the computing platform. Because the creator of the AI model is the model vendor, the information about the creator of the AI model includes creation time of the AI model and public key information of the model vendor.

Optionally, the model vendor further inputs training process information to the AI model training device through the interface. The training process information is information about a processing step in the process of training the AI model. For example, the training process information includes one or more of identification information of the processing step, an authentication code of performance information of an intermediate model obtained through one processing step, a type of the processing step, a timestamp of the processing step, and a parameter of the processing step. The type of the processing step includes, for example, data adoption or data enhancement. The parameter of the processing step includes, for example, epoch, batch, a loss function definition, and a maximum model size setting.

202: The generation device generates the bill of materials file of the AI model, where the bill of materials file includes the target information.

The AI model training device constructs the obtained training dependency information, training environment information, model composition information, model metadata, and training process information into the bill of materials file. The bill of materials file may be in an XML format or a JSON format. In addition, the AI model training device further signs the bill of materials file by using a private key of the model vendor.

In a case, the information about the pre-trained model may further include a storage link of a bill of materials file of the pre-trained model. The bill of materials file of the pre-trained model is similar to information included in the bill of materials file of the AI model. Details are not described again.

Alternatively, refer to FIG. 3b. In another implementation, the model vendor uploads the training resource to the AI model training device, and the AI model training device performs model training iteration based on the training resource. However, the AI model training device does not obtain the training dependency information, training environment information, and the model composition information. Instead, after AI model training is completed, the model vendor autonomously obtains the training dependency information, the training environment information, the model composition information, the model metadata, and training process information, signs each piece of the foregoing information based on a private key of the model vendor, and inputs each piece of the foregoing information into the AI model training device, so that the AI model training device generates a bill of materials file of the AI model, and signs the bill of materials file of the AI model by using the private key of the model vendor. It is clear that the training environment information and the training process information are also optional.

It is clear that during implementation of this implementation, the AI model training device may obtain the training dependency information, the training environment information, the model composition information, the model metadata, and the training process information in another manner. Details are not described.

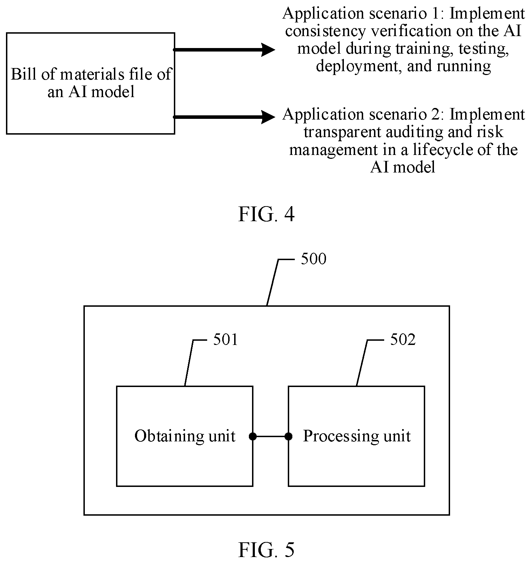

Refer to FIG. 4. After the bill of materials file of the AI model is obtained, the bill of materials file can be used in two application scenarios of implementing consistency verification on the AI model during training, testing, deployment, and running, and implementing transparent auditing and risk management in a lifecycle of the AI model. The following separately describes the two application scenarios.

For implementing the consistency verification on the AI model during training, testing, deployment, and running, in an example, authenticity and integrity of the bill of materials file of the AI model are first verified based on the public key information of the model vendor in the model metadata and an authentication code of the bill of materials file of the AI model. In a process of releasing, integration, deployment, running, and maintenance of the AI model, the authentication code of the AI model in the model metadata is obtained to verify integrity of the AI model. Alternatively, whether the AI model is a model expected to be deployed for a service may be determined based on the model metadata. For example, before an AI model deployed on a device side or an edge side is loaded and run, whether the AI model is correct is verified based on the identification information and the version information of the AI model, to avoid model replacement. If necessary, the AI model may be further verified by using the model composition information and training dependency information.

To implement the transparent auditing and the risk management in the lifecycle of the AI model, the authenticity and the integrity of the bill of materials file of the AI model may be first verified based on the public key information of the model vendor in the model metadata and the authentication code of the bill of materials file of the AI model. In an integration phase of the AI model, the information about the intermediate model is obtained from the model composition information, the information about the training resource for training the AI model and the license information corresponding to the AI model are obtained from the training dependency information, and authenticity and integrity of the information is verified by using the public key information of the computing platform in the model metadata, to support compliance management and transparent auditing of a supply chain. In phases of deployment, running, and maintenance of the AI model, vulnerability impact analysis and risk management are supported based on the training dependency information, the model composition information, the training environment information, and the training process information. For example, if a problem that occurs in the AI model in an actual application process is caused by the training resource, other AI models associated with the training resource can be traced in batches to control an impact range. A training process and an intermediate result of a model can be presented to a model user based on the model composition information and the training process information, to improve transparency of a model training process. Therefore, when detecting that the model deviates from an expectation, the model user can trace a problem based on the foregoing information and detect some manual problems or mis-operation problems. For example, when a model inference result is detected to be overfitting, whether a quantity of model training iterations is set to be extremely large can be traced, and the like. The training environment information may support the model user in understanding and maintaining software and hardware environment information of model training, to improve repeatability of the model training process, support auditing and detecting of accuracy of a model training process and result, and analyzing of a reason why a model deviates from an expectation.

In this application, because the model metadata indicates the attribute information of the AI model, the AI model-based bill of materials file can implement consistency verification on the AI model during training, testing, deployment, and running, to avoid AI model replacement. Because the training dependency information indicates the information about the training resource for training the AI model, and the model composition information indicates the information about the intermediate model in the process of training the AI model, the AI model-based bill of materials file can also implement transparent auditing and risk management on the AI model.

The foregoing describes the method for generating the bill of materials file according to this application. The following describes a generation device in this application.

Refer to FIG. 5. A generation device 500 according to this application includes an obtaining unit 501 and a processing unit 502.

The obtaining unit 501 is configured to obtain target information, where the target information includes training dependency information, model composition information, and model metadata, the training dependency information is information about a training resource for training an AI model, the model composition information is information about an intermediate model in a process of training the AI model, and the model metadata is attribute information of the AI model.

The processing unit 502 is configured to generate a bill of materials file of the AI model, where the bill of materials file includes the target information.

In a possible implementation, the training dependency information includes information about a dataset for training the AI model.

In a possible implementation, the training dependency information further includes information about a pre-trained model for training the AI model, and/or information about an initialization parameter for training the AI model, and/or information about a training script for training the AI model.

In a possible implementation, the information about the dataset includes one or more of identification information of the dataset, an obtaining manner of the dataset, a type of the dataset, usage of the dataset, license information of the dataset, a size of the dataset, a storage format of the dataset, a storage location of the dataset, information about a data subset of the dataset, information about a creator of the dataset, and an authentication code of the dataset; the information about the pre-trained model includes one or more of identification information of the pre-trained model, license information of the pre-trained model, information about a creator of the pre-trained model, and an authentication code of the pre-trained model; the information about the initialization parameter includes one or more of identification information of the initialization parameter, a size of the initialization parameter, generation time of the initialization parameter, a storage link of the initialization parameter, and an authentication code of the initialization parameter; and the information about the training script includes one or more of identification information of the training script, a file type of the training script, a size of the training script, a storage path of the training script, information about a creator of the training script, and an authentication code of the training script.

In a possible implementation, the information about the data subset includes one or more of a name of the data subset, a type of the data subset, a quantity of samples of the data subset, a storage location of the data subset, and information about a tag of the data subset.

In a possible implementation, the model composition information includes one or more of identification information of the intermediate model, a file type of the intermediate model, a size of the intermediate model, creation time of the intermediate model, a storage path of the intermediate model, an authentication code of the intermediate model, performance information of the intermediate model, and an authentication code of the performance information of the intermediate model.

In a possible implementation, the model metadata includes one or more of identification information of the AI model, version information of the AI model, description information of the AI model, a storage link of the bill of materials file of the AI model, license information of the AI model, information about a creator of the AI model, computing platform information of the AI model, and an authentication code of the AI model.

In a possible implementation, the target information further includes training process information, and the training process information is information about a processing step in the process of training the AI model.

In a possible implementation, the training process information includes one or more of identification information of the processing step, a type of the processing step, a timestamp of the processing step, a parameter of the processing step, and the authentication code of the performance information of the intermediate model obtained after the processing step.

In a possible implementation, the target information further includes training environment information, and the training environment information is information about software and hardware for training the AI model.

In a possible implementation, the training environment information includes one or more of identification information of the software, version information of the software, a type of the software, usage of the software, and license information of the software, and one or more of identification information of the hardware, a model of the hardware, and a type of the hardware.

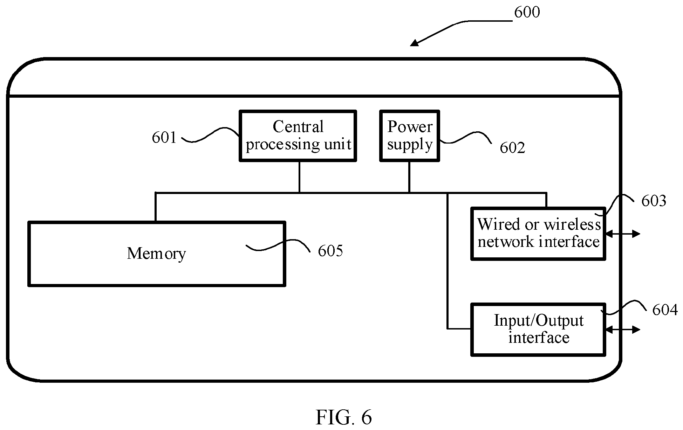

FIG. 6 is a diagram of a structure of a generation device according to an embodiment of this application. The generation device 600 may include one or more central processing units (central processing units, CPUs) 601 and a memory 605. The memory 605 stores one or more application programs or data.

The memory 605 may be a volatile memory or a persistent memory. The programs stored in the memory 605 may include one or more modules, and each module may include a series of instruction operations. Further, the central processing unit 601 may be disposed to communicate with the memory 605, to perform the series of instruction operations in the memory 605 in the generation device 600.

The generation device 600 may further include one or more power supplies 602, one or more wired or wireless network interfaces 603, one or more input/output interfaces 604, and/or one or more operating systems. The central processing unit 601 may perform the operations performed by the generation device in the embodiment shown in FIG. 2. This is not specifically described herein again.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, for example, a USB flash drive, a removable hard disk, a read-only memory (ROM, read-only memory), a random access memory (RAM, random access memory), a magnetic disk, or an optical disc.

## Claims

1. A method for generating a bill of materials file, comprising:
obtaining, by a generation device, target information, wherein the target information comprises training dependency information, model composition information, and model metadata, the training dependency information is information about a training resource for training the AI model, the model composition information is information about an intermediate model in a process of training the AI model, and the model metadata is attribute information of the AI model; and
generating, by the generation device, a bill of materials file of the AI model, wherein the bill of materials file comprises the target information.

2. The method according to claim 1, wherein the training dependency information comprises information about a dataset for training the AI model.

3. The method according to claim 2, wherein the training dependency information further comprises information about a pre-trained model for training the AI model, and/or information about an initialization parameter for training the AI model, and/or information about a training script for training the AI model.

4. The method according to claim 3, wherein the information about the dataset comprises one or more of identification information, an obtaining manner, a type, usage, license information, a size, a storage format, a storage location, information about a data subset, information about a creator, and an authentication code of the dataset; the information about the pre-trained model comprises one or more of identification information, license information, information about a creator, and an authentication code of the pre-trained model; the information about the initialization parameter comprises one or more of identification information, a size, generation time, a storage link, and an authentication code of the initialization parameter; and the information about the training script comprises one or more of identification information, a file type, a size, a storage path, information about a creator, and an authentication code of the training script.

5. The method according to claim 4, wherein the information about the data subset comprises one or more of a name, a type, a quantity of samples, a storage location, and information about a tag of the data subset.

6. The method according to any one of claims 1 to 5, wherein the model composition information comprises one or more of identification information, a file type, a size, creation time, a storage path, an authentication code, performance information, and an authentication code of the performance information of the intermediate model.

7. The method according to claim 6, wherein the model metadata comprises one or more of identification information, version information, description information, a storage link of the bill of materials file, license information, information about a creator, computing platform information, and an authentication code of the AI model.

8. The method according to claim 7, wherein the target information further comprises training process information, and the training process information is information about a processing step in the process of training the AI model.

9. The method according to claim 8, wherein the training process information comprises one or more of identification information, a type, a timestamp, and a parameter of the processing step, and the authentication code of the performance information of the intermediate model obtained after the processing step.

10. The method according to claim 9, wherein the target information further comprises training environment information, and the training environment information is information about software and hardware for training the AI model.

11. The method according to claim 10, wherein the training environment information comprises one or more of identification information, version information, a type, usage, and license information of the software, and one or more of identification information, a model, and a type of the hardware.

12. A generation device, comprising:
an obtaining unit, configured to obtain target information, wherein the target information comprises training dependency information, model composition information, and model metadata, the training dependency information is information about a training resource for training the AI model, the model composition information is information about an intermediate model in a process of training the AI model, and the model metadata is attribute information of the AI model; and
a processing unit, configured to generate a bill of materials file of the AI model, wherein the bill of materials file comprises the target information.

13. The generation device according to claim 12, wherein the training dependency information comprises information about a dataset for training the AI model.

14. The generation device according to claim 13, wherein the training dependency information further comprises information about a pre-trained model for training the AI model, and/or information about an initialization parameter for training the AI model, and/or information about a training script for training the AI model.

15. The generation device according to claim 14, wherein the information about the dataset comprises one or more of identification information, an obtaining manner, a type, usage, license information, a size, a storage format, a storage location, information about a data subset, information about a creator, and an authentication code of the dataset; the information about the pre-trained model comprises one or more of identification information, license information, information about a creator, and an authentication code of the pre-trained model; the information about the initialization parameter comprises one or more of identification information, a size, generation time, a storage link, and an authentication code of the initialization parameter; and the information about the training script comprises one or more of identification information, a file type, a size, a storage path, information about a creator, and an authentication code of the training script.

16. The generation device according to claim 15, wherein the information about the data subset comprises one or more of a name, a type, a quantity of samples, a storage location, and information about a tag of the data subset.

17. The generation device according to any one of claims 12 to 16, wherein the model composition information comprises one or more of identification information, a file type, a size, creation time, a storage path, an authentication code, performance information, and an authentication code of the performance information of the intermediate model.

18. The generation device according to claim 17, wherein the model metadata comprises one or more of identification information, version information, description information, a storage link of the bill of materials file, license information, information about a creator, computing platform information, and an authentication code of the AI model.

19. The generation device according to claim 18, wherein the target information further comprises training process information, and the training process information is information about a processing step in the process of training the AI model.

20. The generation device according to claim 19, wherein the training process information comprises one or more of identification information, a type, a timestamp, and a parameter of the processing step, and the authentication code of the performance information of the intermediate model obtained after the processing step.

21. The generation device according to claim 20, wherein the target information further comprises training environment information, and the training environment information is information about software and hardware for training the AI model.

22. The generation device according to claim 21, wherein the training environment information comprises one or more of identification information, version information, a type, usage, and license information of the software, and one or more of identification information, a model, and a type of the hardware.

23. A generation device, comprising a memory, a transceiver, and a processor, wherein
the memory is configured to store a program; and
the processor is configured to execute the program in the memory, and the processor is configured to enable, according to instructions in code of the program, the generation device to perform the method according to any one of claims 1 to 11.

24. A computer-readable storage medium, storing computer instructions or a program, wherein when the computer instructions or the program is executed, a computer is enabled to perform the method according to any one of claims 1 to 11.

25. A computer program product, comprising computer instructions or a program, wherein when the computer instructions or the program is executed, a computer is enabled to perform the method according to any one of claims 1 to 11.
